# EUROPÄISCHE PATENTANMELDUNG

(11) **EP 4 509 443 A1**
(43) Veröffentlichungstag der Anmeldung: **19.02.2025**
(21) Anmeldenummer: 24194571.6
(22) Anmeldetag: 14.08.2024
(51) Int. Cl.: B65G 61/00, B65G 67/08, B65G 67/24, B65G 67/20

(54) **VERFAHREN ZUM BE- UND/ODER ENTLADEN VON EINZELPACKSTÜCKEN IN EIN LADEVOLUMEN**

(30) Priorität: 16.08.2023 DE 102023121875
(71) Anmelder: TRAPO GmbH, 48712 Gescher-Hochmoor (DE)
(72) Erfinder: MÖLLMANN, Erik, Rhede (DE); KURTENBACH, Stefan, Schermbeck (DE)
(74) Vertreter: Lenzing Gerber Stute

(57) **Zusammenfassung**

Die Erfindung betrifft ein Verfahren zum Be- und/oder Entladen von Einzelpackstücken (7) in ein Ladevolumen (6) mit folgenden Beladeschritten:
a) Auslagern eines Einzelpackstückes (7), das in das Ladevolumen (6) beladen werden soll,
b) Fördern des Einzelpackstückes (7) auf eine Förderstrecke (17), die von einem Sockel (22) eines selbstfahrenden Fahrzeugs (4) überspannt ist, wobei auf dem Sockel (22) ein Roboter (5) befestigt ist und der Roboter (5) sechs Freiheitsgrade und ein Werkzeug (30) zum Bewegen eines Einzelpackstückes (7) aufweist,
c) Fördern des Einzelpackstückes (7) mittels der Förderstrecke (17) zu einer Übergabeposition, wobei die Übergabeposition in Förderrichtung hinter dem Roboter (5) liegt,
d) Bewegen des Werkzeuges (30) zur Übergabeposition,
e) Aufnehmen des Einzelpackstückes (7) mittels des Werkzeuges (30) und Bewegen des Einzelpackstückes (7) mittels des Roboters (5) zur finalen Position in dem Ladevolumen (6) und Ablegen des Einzelpackstückes (7) mittels des Werkzeuges (30) in der finalen Position in dem Ladevolumen (6)
und/oder mit entsprechenden Entladeschritten, in umgekehrter Reihenfolge.

## Beschreibung

Die Erfindung betrifft ein Verfahren zum Be- und/oder Entladen von Einzelpackstücken in ein Ladevolumen, ein Be- und Entladesystem mit einem selbstfahrenden Fahrzeug mit einem Roboterarm, die Verwendung des Be- und Entladesystem zur Be- und Entladung eines Ladevolumens sowie ein Computerprogrammprodukt.

In Logistikzentren werden große Mengen an Päckchen, Paketen oder Versandtaschen in Ladevolumen, die beispielsweise in LKW-Anhängern, Bahncontainern, mittels Ladebrücken oder in Flughafen-Dollies ausgebildet werden, eingeladen und nach dem Transportvorgang in einem Verteilzentrum entladen oder an ein angeschlossenes Logistiksystem, z.B. eines Paketdienstleisters übergeben.

Bisher erfolgt der Be- und Entladevorgang meistens an sogenannten Teleskopfördervorrichtungen (auch Teleskopbänder oder Teleskopförderer genannt), an denen die Ladevolumen an großen Eingangstoren von Logistikzentren bereitgestellt werden und die Pakete von Hand von Förderbändern entnommen und in die Ladevolumen gestapelt werden und bei der Entladung die Pakete aus dem Ladevolumen von Hand entnommen werden und auf der Teleskopfördervorrichtung abgelegt werden.

In den neusten Generationen von Beladesystemen übernehmen Roboter das Ablegen und Aufnehmen der Stückgüter in dem Ladevolumen.

Aus der Schrift US 5,015,145 ist beispielsweise ein Beladesystem mit einem Roboterarm bekannt, der mit einem Vakuumgreifer ausgestattet ist. Der Roboterarm steht zwischen einem Ende eines Fördersystems und dem Ablageort des mittels des Fördersystems zu transportierenden Paketes. Der Roboterarm greift dabei nicht nach hinten, um ein ankommendes Paket aufzunehmen, sondern er rotiert um eine Querachse um das Paket zu greifen und danach in dem Laderaum abzulegen. Der Roboterarm ist in der Vertikalen in der Bewegung an einem Portal geführt, wodurch die Bewegung des Roboterarms eingeschränkt ist. Auch bekannt sind Entladesysteme, beispielsweise aus der Schrift US 10,646,762, die vollautomatisiert mehrere Pakete gleichzeitig aus dem Laderaum entladen. Solche Entladesysteme eigenen sich nicht für die Beladung, bei der das Paket einzeln gegriffen und gezielt abgelegt werden muss, um einen hohen Füllgrad des Laderaumes zu erreichen.

Es ist eine Aufgabe der Erfindung ein Verfahren zum Be- und Entladen von Einzelpackstücken in ein Ladevolumen anzugeben, dass eine schnelle Entladung und eine besonders gute Genauigkeit der Ablage bei hoher Taktzeit beim Beladen ermöglicht.

Die Erfindung wird gelöst von einem Verfahren zum Be- und/oder Entladen von Einzelpackstücken in ein Ladevolumen mit den Merkmalen des Anspruchs 1, einem Be- und Entladesystem mit den Merkmalen des Anspruchs 6, einer Verwendung des Be- und Entladesystem zur Be- und Entladung eines Ladevolumens eines an einer Laderampe oder Ladebrücke eines Logistikzentrums stehenden Lkws, sowie einem Computerprogrammprodukt mit den Merkmalen des Anspruchs 11.

Demnach ist ein Verfahren zum Be- und/oder Entladen von Einzelpackstücken in ein Ladevolumen mit folgenden Beladeschritten vorgesehen:
a) Auslagern eines Einzelpackstückes, das in das Ladevolumen beladen werden soll,
b) Fördern des Einzelpackstückes auf eine Förderstrecke, die von einem Sockel eines selbstfahrenden Fahrzeugs überspannt ist, wobei auf dem Sockel ein Roboter befestigt ist und der Roboter sechs Freiheitsgrade und ein Werkzeug zum Bewegen eines Einzelpackstückes aufweist,
c) Fördern des Einzelpackstückes mittels der Förderstrecke zu einer Übergabeposition, wobei die Übergabeposition in Förderrichtung hinter dem Roboter liegt,
d) Bewegen des Werkzeuges zur Übergabeposition,
e) Aufnehmen des Einzelpackstückes mittels des Werkzeuges und Bewegen des Einzelpackstückes mittels des Roboters zur finalen Position in dem Ladevolumen und Ablegen des Einzelpackstückes mittels des Werkzeuges in der finalen Position in dem Ladevolumen
und/oder mit folgenden Entladeschritten:
f) Bewegen des Werkzeuges zu einem Einzelpackstück in dem Ladevolumen, das entladen werden soll,
g) Aufnehmen des Einzelpackstückes mittels des Werkzeuges und Bewegen des Einzelpackstückes mittels des Roboters zu der Übergabeposition auf der Förderstrecke, die in Förderrichtung vor dem Roboter liegt,
h) Fördern des Einzelpackstückes mittels der Förderstrecke.

Dadurch, dass die Übergabeposition vor bzw. hinter dem Roboter, insbesondere mittig liegt, auf der dem Laderaum und der finalen Position des Einzelpackstückes liegenden Seite, muss der Roboter nicht hinter sich oder zur Seite greifen um das Einzelpackstück aufzunehmen und eine hohe Taktzeit kann erreicht werden. Bevorzugt handelt es sich bei dem Roboter um einen Roboterarm mit dem Werkzeug angeordnet an einem freien Ende. Der Roboterarm weist vorzugsweise eine erste vertikale Drehachse auf, um die der Roboterarm gegenüber dem Sockel schwenkbar ist. Bevorzugt liegen die Übergabeposition und der Roboterarm derart im Laderaum, dass ein Winkel um die vertikale Drehachse zwischen einer Aufnahme-bzw. Ablageposition jedes Einzelpackstückes und der Übergabeposition einen Betrag von kleiner 50°, insbesondere kleiner 45° aufweist.

Vorzugsweise weist das Werkzeug einen weiteren Freiheitsgrad auf, so dass insgesamt sieben Freiheitsgrade zur Verfügung stehen.

Die Schritte erfolgen bevorzugt in der angegebenen Reihenfolge. Einzelpackstücke sind bevorzugt Pakete (in Kartons eingepackte Ware) und/oder flexible Versandtaschen. Das Ladevolumen ist das zu beladene Volumen. Es ist bevorzugt quaderförmig und auf wenigstens vier Seiten durch eine Wand (starr, aber auch flexibel beispielsweise in Form einer Lkw-Plane) nach oben, unten und zur Seite hin begrenzt. Die Begrenzungen sind bevorzugt Außenwände. In anderen Worten findet keine weitere Unterteilung eines Gesamttransportvolumens in der Breite oder Höhe statt. Die Begrenzung nach vorne und hinten kann durch eine Außenwand, wie eine Vorderwand und eine Rückwand beispielsweise eines Containers oder eines Lkws definiert sein. Das selbstfahrende Fahrzeug kann autonom fahren. Beim Be- und Entladen befindet es sich (je nach Beladezustand) innerhalb oder außerhalb des Ladevolumens. Das Auslagern kann aus einem Zwischenspeicher, der dem Lagerhaus angeschlossen ist oder unmittelbar aus einem Lagerhaus erfolgen.

Die Förderstrecke kann Teil des selbstfahrenden Fahrzeuges oder durch einen zusätzlichen Förderer gebildet sein, der in das selbstfahrende Fahrzeug und den Sockel hineinragt. Vorzugsweise ist die Förderstrecke ortsfest mit dem selbstfahrenden Fahrzeug verbunden und in Schritt b) und/oder nach Schritt h) erfolgt anschließend an die Förderstrecke das Fördern mittels eines Teleskopförderers.

Der Teleskopförderer kann als ausfahrbarer Bandförderer ausgebildet sein. Je nach Beladezustand kann sowohl die Position des selbstfahrenden Fahrzeuges als auch die Länge der Förderstrecke des Teleskopförderers angepasst werden. Die Abstimmung erfolgt bevorzugt vollautomatisiert. Der Teleskopförderer ist bevorzugt nicht mechanisch mit dem selbstfahrenden Fahrzeug gekoppelt. Es kann aber auch vorgesehen sein, dass ein Endbereich des Teleskopförderers die Förderstrecke ausbildet.

In einer bevorzugten Ausführungsform wird in Schritt e) die finale Position derart bestimmt wird, dass ein Füllgrad des Laderaums optimiert wird.

Es ist vorteilhaft, wenn in einem Endbereich der Förderstrecke des selbstfahrenden Fahrzeuges eine Orientierungs- und Positionierungsvorrichtung vorgesehen ist, die in Schritt c) das Einzelpackstück in eine gezielte Position mit einer gezielten Orientierung bringt. Dadurch kann der Roboterarm das Einzelpackstück besonders einfach und schnell aufnehmen.

Das Werkzeug weist bevorzugt einen Greifer, insbesondere einen Vakuum-Sauggreifer. Es können aber auch andere pneumatische und/oder mechanische Greifvorrichtungen eingesetzt werden.

Es kann vorgesehen sein, dass am Ende der Förderstrecke des selbstfahrenden Fahrzeuges eine Klappe angeordnet ist, die einen Endanschlag ausbildet, so dass in Schritt d) das Einzelpackstück in Anlage mit dem Endanschlag gebracht wird und dass beim Aufnehmen des Einzelpackstückes in Schritt e) die Klappe nach vorne weggeklappt ist und das Einzelpackstück frei zugänglich für den Endeffektor des Roboterarmes ist.

Weiterhin ist ein Be- und Entladesystem mit einem selbstfahrenden Fahrzeug mit
- einer Plattform,
- einem auf der Plattform angeordneten Sockel,
- einem auf dem Sockel angeordneten Roboter(arm) aufweisend sechs Freiheitsgrade,
- einem am Roboter(arm) befestigten Werkzeug mit einem weiteren Freiheitsgrad zum Aufnehmen eines einzelnen Einzelpackstückes,
- einer Fördereinheit, die sich durch den Sockel erstreckt und an einem Ende eine Übergabeposition aufweist, die in Förderrichtung der Fördereinheit beim Beladen hinter einem auf dem Sockel angeordneten Gestell des Roboter(armes) angeordnet ist.

Wie oben bereits angemerkt, kann durch den kleinen Winkel eine hohe Taktzeit erreicht werden. Vorzugsweise ist die Anordnung des Roboters(arm) und der Übergabeposition wie oben beschrieben gewählt.

Vorzugsweise ist das Werkzeug an einen Flansch des Roboterarmes anbringbar. Dadurch wird der Roboter besonders kostengünstig, da herkömmliche Industrieroboter verwendet werden können, die mit einem entsprechenden Werkzeug mit einem Greifer versehen werden.

Es ist vorteilhaft, wenn in einem Endbereich der Förderstrecke des selbstfahrenden Fahrzeuges eine Orientierungs- und Positionierungsvorrichtung vorgesehen ist, die dazu eingerichtet ist, in einem Beladezustand das Einzelpackstück in eine gezielte Position mit einer gezielten Orientierung zu bringen.

Vorzugsweise umfasst das Be- und Entladesystem einen Teleskopförderer, dessen Förderlänge auf die Position des selbstfahrenden Fahrzeuges abstimmbar ist, und dessen Förderstrecke unmittelbar an die Fördereinheit des selbstfahrenden Fahrzeuges angrenzt.

Außerdem ist eine Verwendung des zuvor beschriebenen Be- und Entladesystem zur Be- und Entladung eines Ladevolumens eines an einer Laderampe oder Ladebrücke eines Logistikzentrums stehenden Lkws vorgesehen.

Zudem ist ein Computerprogrammprodukt mit Anweisungen vorgesehen, die das zuvor beschriebene Be- und Entladesystem veranlassen, die Schritte des beschriebenen Verfahrens auszuführen.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Ansicht eines Be- und Entladesystems bei der Beladung eines Ladevolumens eines Lkws,
- Figur 2:: eine Detailansicht des Be- und Entladesystems der Figur 1, sowie
- Figur 3:: eine Ansicht eines selbstfahrenden Fahrzeugs des Be- und Entladesystems der Figur 1,
- Figur 4:: eine weitere Ansicht des selbstfahrenden Fahrzeuges, sowie
- Figur 5:: eine Detailansicht eines Roboterarms des selbstfahrenden Fahrzeuges bei der Beladung.

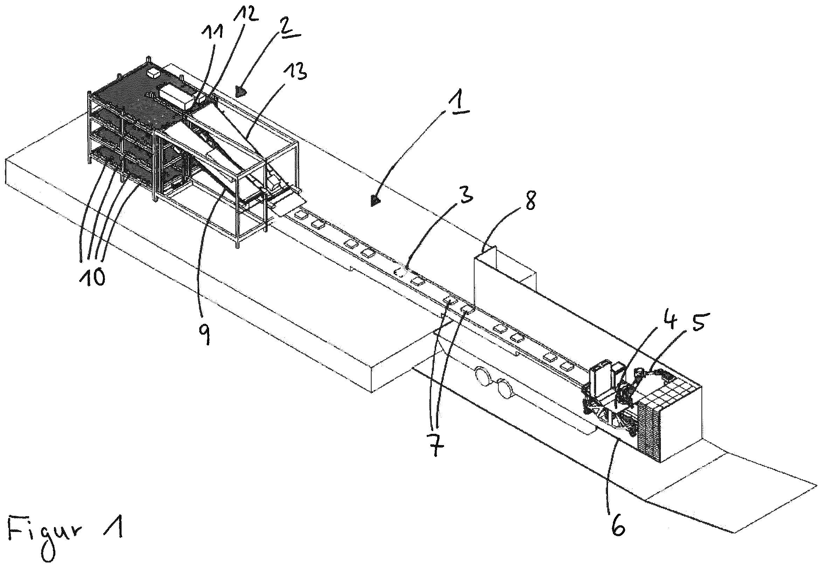

In der Figur 1 ist ein Beladesystem 1 mit einem Zwischenspeicher 2, einem Teleskopförderer 3 und einem selbstfahrenden Fahrzeug 4, auf dem ein Roboterarm 5 befestigt ist, dargestellt.

Der Zwischenspeicher 2 steht in einem Verladebereich bzw. angrenzend an einen Verladebereich eines Logistikzentrums und liegt somit außerhalb eines Ladevolumens 6. Einzelpackstücke 7 in Form von Paketen werden für eine vordefinierte Laderampe 8 aus einem Lagerhaus ausgelagert und zu dem Zwischenspeicher 2 gefördert (nicht dargestellt). Dabei erfolgt die Aussortierung aus dem Lagerhaus zufällig. Die einzige Sortierung die stattfindet, ist die Zuordnung zum Zwischenspeicher 2 bzw. zur Laderampe 8. Die Reihenfolge der geförderten Einzelpackstücke 7 ist unbestimmt. Die Pakete weisen einen festen Karton in quaderförmiger Form auf, in dem Waren, insbesondere Kleidung verpackt sind. Informationen, wie Gewicht, Inhalt, beispielsweise über QR-/ BAR-Code, und/oder Größe der Einzelpackstücke 7 können bei der Zuführung zum Zwischenspeicher 2 bereits erfasst sein. Auch die Position und die Orientierung können bekannt sein. Es ist aber auch denkbar, dass diese Informationen oder ein Teil davon erst bei der Zuführung in den Zwischenspeicher 2, im Zwischenspeicher 2 selbst und/oder beim Abführen aus dem Zwischenspeicher 2 erfasst werden.

Die Zuführung in den Zwischenspeicher 2 erfolgt an einer Querseite, die sich senkrecht zur Förderrichtung des Teleskopförderers 3 erstreckt. Die Zuführung umfasst eine höhenvariabel Förderstrecke 9 in Form einer Rampe. Die Förderstrecke 9 der Zuführung ist geradlinig und erstreckt sich parallel zur Längsrichtung des Teleskopförderers 2. Bei der Zuführung kann vorgesehen sein, dass die Orientierung des Einzelpackstückes 7 definiert und/oder geändert wird.

Der Zwischenspeicher 2 weist vier Ebenen 10 mit jeweils zwei Speicherplätzen 11,12 auf. In jeweils einem Speicherplatz kann ein Einzelpackstück 7 zwischengespeichert bzw. zwischengelagert werden. In anderen Worten kann ein Einzelpackstück 7 in dem Speicherplatz für einen definierten Zeitraum gehalten werden, bis das System das Abführen des Einzelpackstückes fordert. Von der Zuführung gelangen die Pakete auf die ausgewählte Ebene 10 und werden dort mittels Fördertechnik vom Übergabepunkt ausgehend innerhalb der Ebene 10 zum Speicherplatz 11,12 transportiert. Wenn eine Orientierung der Einzelpackstücke 7 innerhalb der Ebene 10 erfolgt, werden die Pakete bevorzugt so positioniert, dass ein direktes Abführen möglich ist.

An die beiden Speicherplätze 11,12 einer Ebene 10 schließt sich eine Abführung an, die ebenfalls eine höhenvariabel Förderstrecke 13 in Form einer Rampe umfasst. Es sind zwei Übergabepunkte, die an die Speicherplätze 11,12 unmittelbar anschließen zur Abführung vorgesehen. Beide Übergabepunkte sind einer einzigen Förderstrecke 13 zugeordnet. Ein auf die Abführung übergebenes Paket wird unmittelbar auf dem Teleskopförderer 2 abgelegt, bzw. fällt auf das Fördermittel des Teleskopförderers. Die Abführung liegt daher zumindest an einem Ende oberhalb des Fördermittels des Teleskopförderers 2. Die Förderstrecke der Abführung ist geradlinig und erstreckt sich parallel zur Längsrichtung des Teleskopförderers 2. Die Förderstrecke 13 der Abführung liegt neben der Förderstrecke 9 der Zuführung und parallel dazu. Dadurch wird der Zwischenspeicher besonders kompakt. Die beiden Förderstrecken 9,13 lassen sich jeweils an einem Ende in der Höhe verfahren. Das Ende kann somit auf die Höhe der jeweiligen Ebene 10 gefahren werden, so dass eine Zuführung oder Abführung aus der entsprechenden Ebene 10 möglich ist. Bei der Fördertechnik der Förderstrecke 9,13 kann es sich um Rollen-, Riemen-, Gurt-, und/oder Kettenförderer handeln. Es ist denkbar, dass bei der Bewegung der Pakete in der Ebene 10, die Orientierung der Pakete angepasst bzw. vorgenommen wird.

Die Anzahl der benötigten Speicherplätze 11,12 ergibt sich aus dem jeweiligen Anwendungsfall. In der dargestellten Ausführungsform weisen alle zu beladenen Pakete ein Abmaß auf, das sich aus vier Kombinationsmöglichkeiten aus drei unterschiedlichen Paketlängen und zwei unterschiedlichen Paketbreiten ergibt, wobei die Paketlänge und die Paketbreite sich auf die spätere Lage im Stapel im Laderaum beziehen. Die Pakete können daher sehr platzsparend gestapelt werden. Pakete mit der kleinsten Grundfläche der Kombinationsmöglichkeiten machen in der dargestellten Ausführungsform etwa 33% der Gesamtanzahl der Einzelpackstücke 7 aus. Mit acht Speicherplätzen 11,12 befindet sich mit hoher Wahrscheinlichkeit ein Paket an einem der Speicherplätze 11,12, das die für eine bestmögliche Auslastung des Ladevolumens 6 benötigten Eigenschaften, wie beispielsweise die gleiche Grundfläche aufweist. Durch identische Grundflächen können im Laderaum Stapel mit einem hohen Dichtegrad gebildet werden, da kein Luftspalt aufgrund von variierenden Paketgrößen entsteht. Die Anzahl der Speicherplätze 11,12 kann in einer Größenordnung zwischen 4 und 30 liegen, insbesondere zwischen 4 und 10. Dieser Bereich ist besonders wirtschaftlich, da die Kosten und der benötigte Raum für den Zwischenspeicher 2 in einem guten Verhältnis zu der daraus resultierenden Verbesserung des Füllgrades stehen. Trotz automatisierter bzw. autonomer Beladung kann so ein Füllgrad des Ladevolumens von 85-95%, insbesondere zwischen 88% und 93% erreicht werden. Die Kombinationsmöglichkeiten aus Paketlänge und Paketbreite liegen bevorzugt zwischen 3 und 10, insbesondere zwischen 3 und 5.

Die Software zur Optimierung der Beladung wählt ein an den Speicherplätzen 11,12 zur Verfügung stehendes Paket aus und dieses wird über die Abführung an den Teleskopförderer 3 übergeben.

Der freie Speicherplatz 11,12 wird danach wiederbesetzt. Bevorzugt wird der Speicherplatz 11,12 von einem Paket besetzt, dass möglichst ähnlich zu dem abgeführten Paket ist, insbesondere eine ähnliche, bevorzugt identische Grundfläche aus Paketlänge und Paketbreite aufweist.

Der Teleskopförderer 3 weist eine Förderstrecke mit einer variablen Länge auf. In den Figuren ist der Teleskopförderer 3 lediglich schematisch dargestellt. Es handelt sich um einen Bandförderer. Der Teleskopförderer weist einen in einer entsprechenden Halteeinrichtung höhenverstellbar gelagerten Grundkörper auf, in dem mindestens zwei ausfahrbare (und maximal fünf) Teleskopsegmente verschiebbar gelagert sind. Der Grundkörper und die Teleskopsegmente sind mit Umlenkrollen versehen, um die ein Transportband herumgeführt ist. Der Teleskopförderer 3 ragt in das Ladevolumen 6 hinein und die Förderstrecke endet innerhalb des Ladevolumens 6. Die Förderstrecke ist an die Position des selbstfahrenden Fahrzeuges 4 angepasst bzw. auf diese abgestimmt. Von der Förderstrecke des Teleskopförderers 2 gelangt das Einzelpackstück 7 unmittelbar auf eine Fördereinheit 14 des selbstfahrenden Fahrzeuges und wird dort von dem Roboterarm 5 bzw. dem an dem Roboterarm befestigten Werkzeug gegriffen. Der Roboterarm 5 legt das Paket in dem Ladevolumen 6 an der finalen Position ab. Der Roboter 5 greift die Einzelpackstücke 7 in der Reihenfolge, in der sie auf den Teleskopförderer 2 gelegt wurden. Die Ablage der Pakete erfolgt mit dem Ziel, den Füllgrad des Ladevolumens zu optimieren. Das System überprüft die Ablage der Pakete in dem Ladevolumen 6 mittels Bilderkennung.

Es kann vorgesehen sein, dass die Optimierung für einen Teilbereich des insgesamt zur Verfügung stehenden Ladevolumens 6 vorgenommen wird. Dies erfolgt beispielsweise, wenn zwei oder mehrere Transportziele vorhanden sind. In diesem Fall kommen die aus dem Lagerhaus ausgelagerten Einzelpackstücke 7 sortiert nach dem Transportziel an dem Zwischenspeicher 2 an. Es wird eine Füllgradoptimierung einer ersten Beladung eines ersten Teils des Ladevolumens für ein erstes Transportziel vorgenommen. Danach kann der beladene Teilbereich mit einer Transportsicherung, z.B. einer Querstrebe versehen werden, die den beladenen Teilbereich sichert und von dem übrigen Ladevolumen abgrenzt. Der übrige Teilbereich kann dann einem anderen Transportziel zugeordnet werden. Die Beladung erfolgt dann mit derselben Optimierung, aber vollkommen eigenständig und unabhängig von der ersten Beladung.

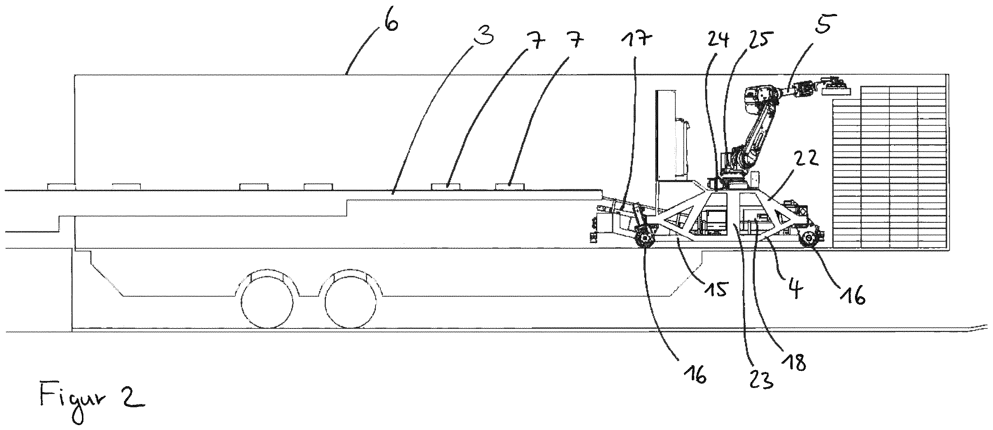

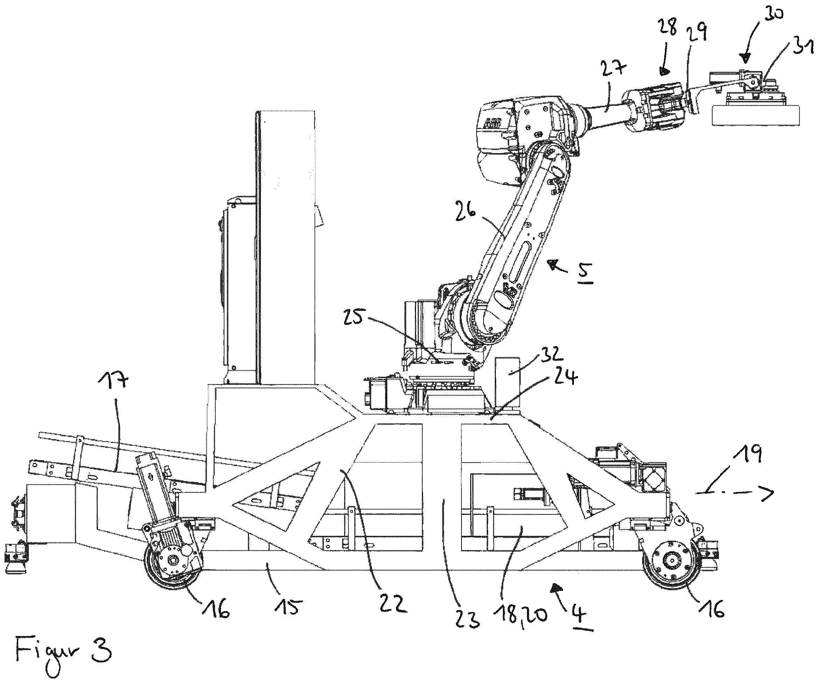

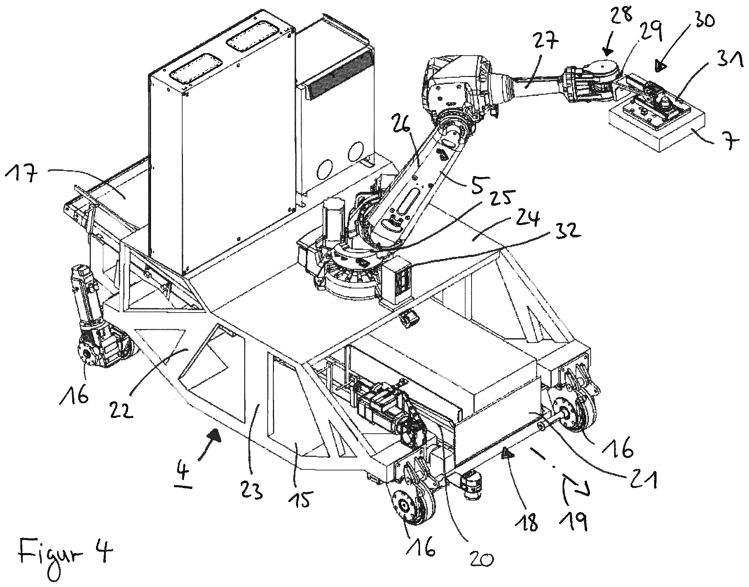

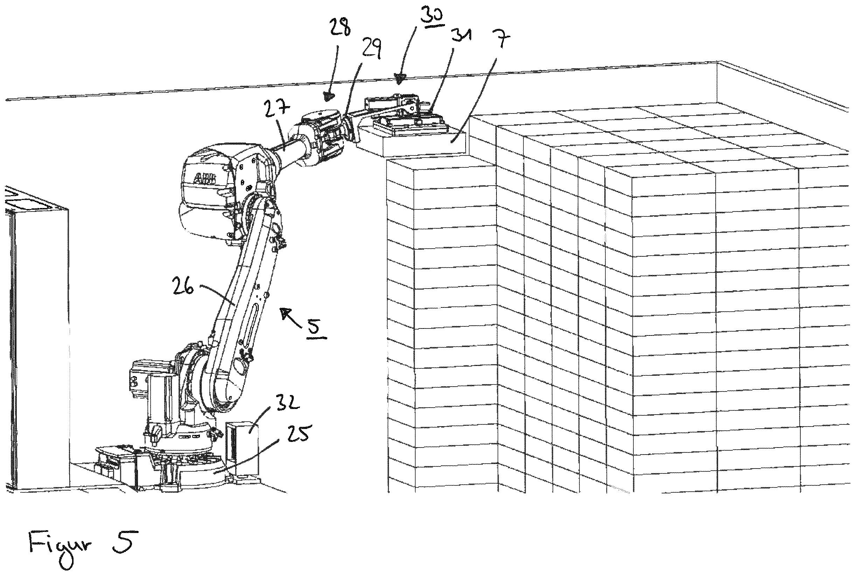

In den Figuren 2 bis 5 ist im Detail das selbstfahrende Fahrzeug 4 mit dem Roboterarm 5 dargestellt. Das selbstfahrende Fahrzeug 4 weist eine Plattform 15 mit einer Fahreinheit mit vier Rädern 16 auf, wobei die Fahreinheit dazu ausgelegt ist, die Plattform 15 zu verfahren. Das Fahrzeug 4 verfährt autonom und navigiert durch die Umgebung, ohne Eingabe von einem Fahrer. Oberhalb der Plattform 15 ist eine Förderstrecke 17 angeordnet. Bei der Fördertechnik der Förderstrecke 17 kann es sich um Rollen-, Riemen-, Gurt-, und/oder Kettenförderer handeln. In der dargestellten Ausführungsform ist die Förderstrecke zweigeteilt. Es ist auch denkbar, die Förderstrecke einteilig mit einem Gelenk zwischen zwei Teilabschnitten auszubilden. Der Teil der Förderstrecke, der an den Teleskopförderer angrenzt, ist in einem Winkel zur Horizontalen einstellbar. Der Anstellwinkel kann derart gewählt werden, dass sichergestellt werden kann, dass die Einzelpackstück 7 bei der Entladung sicher auf dem Teleskopförderer landen. Bei der Beladung wird ein Einzelpackstück 7, hier ein Paket von dem in Figur 2 dargestellten Teleskopförderer 3 an die Förderstrecke 17 übergeben. Die Übergabe erfolgt einzeln an einem einzigen Übergabepunkt, so dass die Pakete nacheinander und in der von dem Teleskopförderer 2 vorgebenen Reihenfolge auf die Förderstrecke 17 übergeben werden. Die Förderstrecke 17 ist geradlinig. Das Paket wird mittels der Förderstrecke 17 zu einer Übergabeposition (siehe Figur 4) bewegt. In einem Endbereich der Förderstrecke 17 ist eine Orientierungs- und Positionierungsvorrichtung 18, wie aus Figur 3 und 4 ersichtlich, vorgesehen. Die Orientierungs- und Positionierungsvorrichtung 18 weist, wie in Figur 4 zu erkennen, zwei seitliche, parallel zur Förderrichtung 19 angeordnete Führungsbleche 20 auf, deren Abstand zueinander veränderbar ist. Die Führungsbleche 20 bewegen sich oberhalb der Förderstrecke 17 und können so das sich entlang der Förderstrecke 17 bewegende Paket in der Bewegung quer zur Förderrichtung 19 einschränken und in Förderrichtung 19 ausrichten. Am Ende der Förderstrecke 17 ist eine in Figur 4 ersichtliche Klappe 21 vorgesehen, die einen Endanschlag ausbildet und das Paket mit seiner in Förderrichtung 19 zeigenden Vorderseite quer zur Förderrichtung 19 ausrichtet. Das Paket nimmt mittels der Orientierungs- und Positionierungsvorrichtung 18 eine definierte Lage auf dem selbstfahrenden Fahrzeug 4 ein. Es ist auch möglich mit dieser Vorrichtung mehrere Pakete gleichzeitig auszurichten und zu positionieren, so können mehrere Pakete auf einmal beladen werden, falls es der Anwendungsfall zulässt.

Ein Sockel 22 überspannt die Förderstrecke 17 im Wesentlichen senkrecht zur Förderrichtung 19. Der Sockel 22 weist Stützen 23 auf, die auf gegenüberliegenden Seiten der Förderstrecke 17 an der Plattform 15 befestigt sind. Die Stützen 23 tragen eine Trägerplatte 24, die sich über die Förderstrecke 17 erstreckt. Auf der Oberseite der Trägerplatte 24 ist der Roboterarm 5 befestigt. Die Pakete werden mittels der Förderstrecke 17 unter der Trägerplatte 24 bzw. durch den Sockel 22 hindurch geführt. Die Orientierungs- und Positionierungsvorrichtung 18 kann teilweise unterhalb des Sockels 22 liegen. Das Ende der Förderstrecke 17 liegt in Draufsicht außerhalb der Trägerplatte 24.

Der Roboterarm 5 ist ein Industrieroboter mit sechs Freiheitsgraden der orthogonalen Bewegung. Er weist ein Gestell 25 auf, gegenüber dem sich der Roboterarm um eine axiale Rotationsachse dreht, die sich in vertikaler Richtung erstreckt. Das Gestell 25 ist auf der Oberseite mit der Trägerplatte 24 versehen. Es trägt einen drehbaren Oberarm 26. Am Vorderende des Oberarms 26 ist ein Unterarm 27 drehbar gehalten. Am Vorderende dieses Unterarms 27 befindet sich ein Gelenk 28. Das Gestell 25, der Oberarm 26 und der Unterarm 27 schwenken mit drei Freiheitsgraden der Drehbewegung. Das Gelenk 28 weist drei Freiheitsgrade der Drehbewegung auf. An dem Gelenk 28 ist an einem Flansch 29 ein Werkzeug 30 befestigt. Das Werkzeug 30 bewegt sich mit einem weiteren Freiheitsgrad und weist einen Vakuum-Sauggreifer 31 auf. Mit dem Werkzeug 30 hat der Roboterarm 5 sieben Freiheitsgrade und eine erweiterte Reichweite, wodurch er beweglicher ist und die notwendigen Bewegungen schneller und effizienter ausführen kann als ein Roboterarm mit sechs Freiheitsgraden. Das Werkzeug 30 mit dem zusätzlichen Freiheitsgrad erlaubt es, dass Pakete auch in einem für die Bewegung eingeschränkten Bereich des Laderaums exakt abgelegt werden können. Außerdem können mittels des Werkzeuges Einzelpackstücke, die auf der Förderstrecke liegen, besonders einfach und schnell aufgerichtet und abgehoben werden. Der Greifprozess ist durch die Überbestimmung besonders dynamisch und sicher.

Das Ende der Förderstrecke bzw. die Übergabeposition liegt projiziert auf die Ebene des Gestells 25 des Roboterarms 5 in einem Abstand zu dem Gestell 25 in Förderrichtung 19, der in einem Bereich zwischen 500mm und 1200mm liegt. Dadurch wird ermöglicht, dass der Roboterarm 5 weder nach hinten greifen muss, um das Paket aufzunehmen, noch um die vertikale Rotationsachse gegenüber dem Gestell 25 über einen Bereich mit einem Betrag größer 50° von der Aufnahme zur Ablage und umgekehrt rotieren muss. Dadurch kann die Beladegeschwindigkeit erhöht und die Taktzeit deutlich verringert werden. Die Übergabeposition liegt unterhalb des Gestells 25. Der vertikale Abstand zwischen der in die Ebene des Gestells 25 projizierten Übergabeposition und dem Gestell 25 liegt in einem Bereich zwischen 300mm und 700mm.

Auf der Trägerplatte 24 des Sockels 22 ist neben dem Roboterarm 5 noch ein Turm 32 mit einer Kameraeinheit angeordnet.

Wie bereits oben beschrieben wurde, werden bei der Beladung die Einzelpackstücke 7, hier Pakete, ausgelagert und durch gezielte Auswahl aus dem Zwischenspeicher 2 über den Teleskopförderer 3 an die Förderstrecke 17 des autonom fahrenden Fahrzeugs 4 übergeben. Das Paket wird mittels der Förderstrecke 17 unterhalb des Roboterarms 5 entlang bewegt und in dem Endbereich mittels der Orientierungs- und Positionierungsvorrichtung 18 ausgerichtet. Der Roboterarm 5 bewegt den Greifer 31 zum Paket. Dazu schwenkt der Roboterarm 5 um die vertikale Rotationsachse um einen Winkel, der maximal 50° entspricht. Durch die kurzen Wege kann der Vorgang besonders schnell ausgeführt werden. Der Roboterarm 5 greift das Paket auf der Oberseite mittels des Vakuum-Sauggreifers 31. Es kann auch eine andere pneumatische und/oder mechanische Greifvorrichtung vorgesehen sein. Zum Greifen des Paketes wird die Klappe 21 bzw. der Endanschlag nach vorne weggekippt, um die Bewegung des Roboterarms 5 nicht zu behindern. Es kann sein, dass der Inhalt des Paketes oder die Größe des Paketes es bedingt, dass das Paket mit der an der Klappe 21 anliegenden vorderen Seite nach oben zeigend transportiert wird. Der Roboterarm 5 greift dann bei heruntergekippter Klappe 21 die Vorderseite des Paketes und richtet das Paket durch eine Schwenkbewegung um eine parallel zur Horizontalen liegenden Achse auf. Die Führungsbleche 20 der Orientierungs- und Positionierungsvorrichtung 18 können beim Greifen des Paketes von vorne das Paket in der Lage fixieren, so dass der Greifer das Paket sicher greifen kann und dieses nicht nach hinten wegrutscht.

Der Roboterarm 5 kann durch die 7 Freiheitsgerade in einer Mehrheit der Fälle das Paket von oben greifen und es bei Bedarf trotz des begrenzten Raumes im Laderaum aufrichten.

Nach dem Greifen wird das Paket zu dem vorgesehenen Ablageort bewegt und dort abgelegt. Während des Bewegungsprozesses wird das Paket für die Ablage im Ablageort passend orientiert. Danach wird der durch das Ablegen gebildete Paketstapel bzw. der Laderaum mittels der Kameraeinheit sensorisch erfasst und mit dem durch die Software vorgegeben Ablageort bzw. Ablagemuster abgeglichen. Wie oben bereits beschrieben, erfolgt die Speicherung der Pakete im Zwischenspeicher, die gezielte Auswahl eines der Pakete aus einem Speicherplatz und das Ablegen mittels des Roboterarms in dem Laderaum mit dem Ziel, den Füllgrad des Laderaums zu optimieren.

Das Be- und Entladesystem erreicht auch bei der Entladung eine hohe Taktzeit, was einen großen Vorteil darstellt.

Bei der Entladung erfolgt das Verfahren der Beladung im Wesentlichen rückwärts. Ein Zwischenspeicher, wie er oben beschrieben wurde, ist für den Entladevorgang nicht notwendig. In einem ersten Schritt wird der Laderaum 6 sensorisch erfasst, um Informationen über den Zustand der Beladung und der Lage der Pakete zu erhalten. Der Roboterarm 5 bewegt den Greifer 31 zu einem Paket und greift dieses einzeln an der vorderen (zu dem Roboterarm zeigenden Seite) oder an der oberen Seite. Der Roboterarm 5 legt das Paket am Ende der Förderstrecke 17 ab und muss dazu maximal um einen Betrag von 50° um die vertikale Rotationsachse gegenüber dem Gestell 25 schwenken, wodurch eine geringe Taktzeit erreichbar ist. Beim Entladen ist die den Endanschlag ausbildende Klappe 21 nach vorne weggekippt, so dass eine Behinderung des Roboterarmes 5 beim Ablegen eines Einzelpackstückes auf der Förderstrecke 17 ausgeschlossen ist. Außerdem befindet sich die Orientierungs- und Positionierungsvorrichtung 18 in einer geöffneten Stellung. Die beiden Führungsbleche 20 liegen dabei mit einem maximalen Abstand voneinander entfernt und außerhalb der Förderstrecke 17 und behindern so den Abtransport des Paketes nicht. Das Paket wird auf der Förderstrecke 17 durch den Sockel 22 hindurch und somit unterhalb des Gestells des Roboterarms gefördert und an den Teleskopförderer 2 übergeben. Die Pakete werden einzeln aus dem Laderaum 6 entnommen und nacheinander in der Reihenfolge des Ablegens auf der Förderstrecke 17 gefördert. Es ist auch denkbar mehrere Pakete gleichzeitig mittels des Roboterarmes aus dem Laderaum zu entnehmen. An den Teleskopförderer 2 kann eine Übergabestation oder ein Fördersystem angeschlossen sein. Denkbar sind beispielsweise eine starre Fördertechnik, fahrerlose Transportsysteme sowie manuelle oder mechanische Fördermittel.

## Patentansprüche

1. Verfahren zum Be- und/oder Entladen von Einzelpackstücken (7) in ein Ladevolumen (6) mit folgenden Beladeschritten:
a) Auslagern eines Einzelpackstückes (7), das in das Ladevolumen (6) beladen werden soll,
b) Fördern des Einzelpackstückes (7) auf eine Förderstrecke (17), die von einem Sockel (22) eines selbstfahrenden Fahrzeug (4) überspannt ist, wobei auf dem Sockel (22) ein Roboter (5) befestigt ist und der Roboter (5) sechs Freiheitsgrade und ein Werkzeug (30) zum Bewegen eines Einzelpackstückes (7) aufweist,
c) Fördern des Einzelpackstückes (7) mittels der Förderstrecke (17) zu einer Übergabeposition, wobei die Übergabeposition in Förderrichtung hinter dem Roboter (5) liegt,
d) Bewegen des Werkzeuges (30) zur Übergabeposition,
e) Aufnehmen des Einzelpackstückes (7) mittels des Werkzeuges (30) und Bewegen des Einzelpackstückes (7) mittels des Roboters (5) zur finalen Position in dem Ladevolumen (6) und Ablegen des Einzelpackstückes (7) mittels des Werkzeuges (30) in der finalen Position in dem Ladevolumen (6)
und/oder mit folgenden Entladeschritten:
f) Bewegen des Werkzeuges (30) zu einem Einzelpackstück (7) in dem Ladevolumen (6), das entladen werden soll,
g) Aufnehmen des Einzelpackstückes (7) mittels des Werkzeuges (30) und Bewegen des Einzelpackstückes (7) mittels des Roboters (5) zu der Übergabeposition auf der Förderstrecke (17), die in Förderrichtung vor dem Roboter liegt,
h) Fördern des Einzelpackstückes (7) mittels der Förderstrecke (17).

2. Verfahren nach Anspruch 1, **dadurch gekennzeichnet, dass** die Förderstrecke (17) ortsfest mit dem selbstfahrenden Fahrzeug (4) verbunden ist und das in Schritt b) und/oder nach Schritt h) anschließend an die Förderstrecke (17) das Fördern mittels eines Teleskopförderers (3) erfolgt.

3. Verfahren nach Anspruch 1 oder 2, **dadurch gekennzeichnet, dass** in Schritt e) die finale Position derart bestimmt wird, dass ein Füllgrad des Laderaums (6) optimiert wird.

4. Verfahren nach einem der vorhergehenden Ansprüche, **dadurch gekennzeichnet, dass** in einem Endbereich der Förderstrecke (17) des selbstfahrenden Fahrzeuges (4) eine Orientierungs- und Positionierungsvorrichtung (18) vorgesehen ist, die in Schritt c) das Einzelpackstück (7) in eine gezielte Position mit einer gezielten Orientierung bringt.

5. Verfahren nach einem der vorhergehenden Ansprüche, **dadurch gekennzeichnet, dass** am Ende der Förderstrecke (17) des selbstfahrenden Fahrzeuges (4) eine Klappe (21) angeordnet ist, die einen Endanschlag ausbildet, so dass in Schritt c) das Einzelpackstück (7) in Anlage mit dem Endanschlag gebracht wird und dass beim Aufnehmen des Einzelpackstückes (7) in Schritt e) die Klappe (21) nach vorne weggeklappt ist und das Einzelpackstück (7) frei zugänglich für den Endeffektor (31) des Roboterarmes (5) ist.

6. Be- und Entladesystem mit einem selbstfahrenden Fahrzeug (4) mit
- einer Plattform (15),
- einem auf der Plattform (15) angeordneten Sockel (22),
- einem auf dem Sockel (22) angeordneten Roboter (5) aufweisend sechs Freiheitsgrade,
- einem am Roboter (5) befestigten Werkzeug (30) mit einem weiteren Freiheitsgrad und einem Greifer (31) zum Aufnehmen eines einzelnen Einzelpackstückes (7),
- einer Fördereinheit (17), die sich durch den Sockel (22) erstreckt und an einem Ende eine Übergabeposition aufweist, die in Förderrichtung der Fördereinheit (17) beim Beladen hinter einem auf dem Sockel angeordneten Gestell (25) des Roboters (5) angeordnet ist.

7. Be- und Entladesystem nach Anspruch 6, **dadurch gekennzeichnet, dass** der Roboter ein Roboterarm (5) ist und das Werkzeug (30) an einen Flansch des Roboterarmes (5) anbringbar ist.

8. Be- und Entladesystem nach Anspruch 6 oder 7, **dadurch gekennzeichnet, dass** in einem Endbereich der Förderstrecke (17) des selbstfahrenden Fahrzeuges eine Orientierungs- und Positionierungsvorrichtung (18) vorgesehen ist, die dazu eingerichtet ist, in einem Beladezustand das Einzelpackstück (7) in eine gezielte Position mit einer gezielten Orientierung zu bringen.

9. Be- und Entladesystem nach einem der Ansprüche 6 bis 8, **dadurch gekennzeichnet, dass** das Be- und Entladesystem einen Teleskopförderer (3) umfasst, dessen Förderlänge auf die Position des selbstfahrenden Fahrzeuges (4) abstimmbar ist, und dessen Förderstrecke unmittelbar an die Fördereinheit (17) des selbstfahrenden Fahrzeuges (4) angrenzt.

10. Verwendung des Be- und Entladesystem nach einem der Ansprüche 6 bis 9 zur Be- und Entladung eines Ladevolumens (6) eines an einer Laderampe (8) oder Ladebrücke eines Logistikzentrums stehenden Lkws.

11. Computerprogrammprodukt mit Anweisungen, die das Be- und Entladesystem (1) nach einem der Ansprüche 6 bis 9 veranlassen, die Schritte des Verfahrens nach einem der Ansprüche 1 bis 5 auszuführen.
